(19) Europäisches Patentamt / European Patent Office / Office européen des brevets

(11) **EP 4 485 279 A1**

(12) **EUROPEAN PATENT APPLICATION**

(43) Date of publication:
**01.01.2025 Bulletin 2025/01**

(21) Application number: **24184805.0**

(22) Date of filing: **26.06.2024**

(51) International Patent Classification (IPC):
**G06N 3/0495** (2023.01)    **G06N 3/082** (2023.01)

(52) Cooperative Patent Classification (CPC):
**G06N 3/082; G06N 3/0495;** G06N 3/0464

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023 US 202318344049**

(71) Applicant: **Nano Dimension Technologies, Ltd.**
**Ness Ziona 7403635 (IL)**

(72) Inventors:
• **RUBIN, Eri**
  **9083500 1 Ma'ale Ha'hamisha, Kibbutz Ma'ale Ha'hamisha (IL)**
• **DAVID, Eli**
  **6958313 4 Schnitzer Shmuel Street, Apt. 17, Tel Aviv (IL)**
• **ROVINSKY, Dany**
  **5405617 14 Rehavat Ilan, Apartment 36, Givat Shmuel (IL)**

(74) Representative: **Pearl Cohen Zedek Latzer Baratz UK LLP**
**The Gridiron Building**
**One Pancras Square**
**London N1C 4AG (GB)**

(54) **SPARSIFICATION OF NEURAL NETWORK TO FILTER TRAINING DATA**

(57)    A device, system, method and non-transitory computer-readable storage medium for filtering a dataset for training a neural network. Initial instances of recorded input samples of source recording device(s) may be encoded, according to an input map, from the training dataset to respective nodes in the neural network's input layer. The input layer of the neural network may be sparsified by eliminating its nodes during a training phase. The training dataset may be filtered to exclude subsequent instances of recorded input samples from the source recording devices encoded in the eliminated nodes. Subsequent instances of the recorded input samples of the filtered training dataset may be encoded to remaining nodes not eliminated (and not to eliminated nodes) in the input layer to train the neural network in a subsequent training phase or generate a prediction output of the neural network in a prediction phase.

RECEIVE AN INITIAL TRAINING DATASET TO SPARSIFY AN INPUT LAYER OF A NEURAL NETWORK — 300

ENCODE INITIAL TRAINING DATASET ACCORDING TO AN INPUT MAP INTO INPUT LAYER NODES OF THE NEURAL NETWORK — 302

SPARSIFY THE NEURAL NETWORK BY ELIMINATING NODES IN THE INPUT LAYER — 304

FILTER A SUBSEQUENT TRAINING DATASET TO EXCLUDE TRAINING DATA ENCODED BY THE INPUT MAP TO THE ELIMINATED NODES OF THE SPARSIFIED NEURAL NETWORK — 306

ENCODE THE SPARSIFIED NEURAL NETWORK WITH THE FILTERED SUBSEQUENT TRAINING DATASET INPUT INTO THE REMAINING NODES NOT ELIMINATED IN THE INPUT LAYER — 308

RE-TRAIN OR PREDICT

**Fig. 3**

EP 4 485 279 A1

## Description

### Field of the Invention

Embodiments of the invention are related to the field of artificial intelligence (AI) by machine learning. In particular, embodiments of the invention are related to deep learning using neural networks.

### Background of the Invention

An artificial neural network, or simply "neural network," is a computer model, resembling a biological network of neurons. Neural networks are a family of methods within machine learning, under artificial intelligence. Neural networks typically have a plurality of artificial "neurons" that are connected by artificial "synapses." There are many types of NNs that have various arrangements of neurons including partially or fully connected NNs, recurrent NNs (RNNs), convolutional NNs (CNNs), NNs with skip connections, etc. For example, a connected NN typically has an input later, multiple middle or hidden layer(s), and an output layer, where each layer has a plurality (e.g., 100s to 1000s) of artificial neurons. In a fully-connected NN, each neuron in a layer (N) may be connected by an artificial "synapse" to all neurons in a prior (N-1) layer and subsequent (N+1) layer, whereas in a partially-connected NN only a subset of neurons in adjacent layers are connected.

A NN is trained based on a training dataset to solve or learn a weight of each synapse indicating the strength of that connection. The weights of the synapses are generally initialized, e.g., randomly. Training is performed by iteratively encoding training data of associated input-output pairs into the neural network by mapping the inputs to the input layer of the NN by an input map (e.g., a surjective map that is one-to-one, one-to-many, or many-to-one), propagating the dataset from the input layer across hidden layers through the NN, outputting a result of the NN applied to the dataset, calculating errors between the expected outputs (e.g., paired with the input in the training dataset) and actual outputs (e.g., NN predicted), and adjusting NN weights to minimize errors. Training may be repeated until the error is minimized, crosses a threshold, or converges. Typically, multiple passes (e.g., tens or hundreds) through the training set are performed (e.g., each sample is input into the NN multiple times). Each complete pass over the entire training dataset of the same data is referred to as one "epoch".

State-of-the art neural networks are commonly trained using Big Data e.g., on the order of gigabytes, terabytes, petabytes, or larger. Increasing the size of a training dataset typically results in greater neural network accuracy. Due to the iterative nature of training, however, increasing training data size causes an exponential increase in training times. As scales of big data have exploded in recent years, neural network training increasingly suffers from cumbersome storage and slow and inefficient training.

Further, not all data is useful, and the quality of training datasets is a significant factor in the accuracy of neural networks. Training data can be neutral (e.g., wasting resources) or even adverse (e.g., harming accuracy) to neural network training. Under the "garbage in - garbage out" principle, the accuracy of neural networks is only as good as the quality of its training data. The magnitude of big data, however, makes it impractical to analyze the quality of individual training datapoints.

Accordingly, there is a need in the art to decrease the size and increase the quality of input training data for improving the efficiency and accuracy of neural network training.

### Summary of the Invention

Embodiments of the invention sparsify a neural network's input layer (and/or one or more hidden layers) and filter or mask training data encoded in eliminated or pruned nodes of the neural network's sparsified layer(s). Sparsification may pressure weights with a positive effect on training accuracy to increase in value (e.g., increasing their significance) and weights with neutral or adverse effect on training accuracy to decrease in value (e.g., decreasing their significance), eliminating nodes with insignificant or minimally significant weights. Because training data from source devices is directly encoded in the input layer, eliminated nodes in the sparsified input layer indicate the source training data encoded therein is likewise neutral or adverse to training. Additionally or alternatively, even if an input layer node is not eliminated, a cumulative pattern of elimination of hidden layer nodes (or low weights) branching from that root input layer node may indicate the source training data encoded therein is likewise neutral or adverse to training. Source devices that generate training data encoded in eliminated nodes may be filtered or masked to exclude future samples or instances of their inputs from training data in training mode or from runtime data in prediction mode. Filtering this neutral or adverse training data may decrease the storage size and increase the quality of the training dataset to improve the speed and accuracy of neural network training and prediction. Training data filters may be applied at various source or intermediate devices along the data collection and transmission path and/or may trigger an alert to diagnose and/or repair malfunctioning or error-ridden source recording devices. Eliminated nodes may be reactivated (e.g., periodically or after repair) to test if the quality of training data encoded therein is improved enough to be reintroduced into the neural network input layer.

In accordance with an embodiment of the invention, a device, system, method and non-transitory computer-readable storage medium is provided for filtering a neural network training dataset. A neural network may be received comprising a plurality of layers, wherein each layer comprising a plurality of nodes, each node connected by a plurality of weights to a respective plurality of nodes in one or more different layers of the plurality of layers. A training dataset may be received comprising initial instances of a plurality of recorded input samples from one or more source recording devices. The initial instances of the plurality of recorded input samples may be encoded, according to an input map, from the training dataset to a plurality of respective nodes in an input layer of the plurality of layers of the neural network. The neural network may be sparsified by eliminating one or more nodes in the input layer of the neural network during a training phase. The training dataset may be filtered to exclude subsequent instances of one or more of the recorded input samples from one or more of the source recording devices encoded by the input map to the eliminated nodes of the sparsified neural network. Subsequent instances of the plurality of recorded input samples of the filtered training dataset may be encoded to remaining nodes not eliminated in the input layer of the sparsified neural network to train the neural network in a subsequent training phase or to predict an output of the neural network in a prediction phase. Subsequent instances of the plurality of recorded input samples filtered (excluded from the filtered training dataset) may not be encoded to (may be excluded from) the nodes eliminated in the sparsified input layer so as not to be used in training the neural network in a subsequent training phase or predicting an output of the neural network in a prediction phase.

## Brief Description of the Figures

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. **1** is a schematic illustration of data structures for sparsifying a neural network input layer to eliminate nodes neural or adverse to training accuracy and filter associated neural or adverse training data encoded in the eliminated nodes, in accordance with some embodiments of the invention;

Fig. **2** is a schematic illustration of a system for filtering a neural network training dataset in accordance with some embodiments of the invention; and

Fig. **3** is a flowchart of a method for filtering a neural network training dataset in accordance with some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## Detailed Description of the Invention

Sparsification or pruning is a technique that eliminates, pressures, prunes or evolves nodes (e.g., artificial neurons or channels and/or weights or filters therebetween) in the neural network, for example, by decreasing weights to insignificance that have a substantially neutral (e.g., redundant or ineffective) or adverse (e.g., harmful or adversarial) effect on the accuracy of training the neural network. Sparsification speeds up training, reduces memory usage and improves NN accuracy, for example, by regularizing the structure of the network. Any sparsification technique may be used including any combination of, for example, $L_1$ regularization, $L_p$ regularization, thresholding, random zero-ing, new weight generation, evolving weights using genetic algorithms, reinforcement learning, and bias based pruning. Sparsification conventionally eliminates nodes only in intermediate layers, and not in the input or output layers, to avoid losing information encoded therein from the training data.

Embodiments of the invention operate contrary to conventional sparsification by eliminating nodes in the input layer to intentionally lose information from the training dataset encoded in the network. Because sparsification eliminates nodes with weights associated with neutral or adverse training effects, nodes eliminated in the input layer are generally associated with training data that are likewise neutral or adverse to training. Sparsification of the input layer thus identifies poor quality training data and their malfunctioning or error-generating source devices.

Embodiments of the invention provide a filter or mask that automatically eliminates future instances of training data from sources whose data is encoded in the eliminated nodes of the sparsified neural network's input layer (and/or one or more hidden layers). This eliminates storing and/or training future instances of input data (e.g., pixel regions of an image captured by a camera, malfunctioning sensors, etc.) from data sources that generated previous instances of the same type of training data that had a neutral or adverse effect on training. Automatically filtering poor quality training data reduces the storage size of training data to reduce memory usage, increases the quality of training data to improve training accuracy, and increases the efficiency of training (e.g., with less training data and smaller NNs) to improve training speed.

Sparsifying the input layer by X% (removing, on average, X out of every 100 input layer nodes) may, for example, trigger a X% reduction in training data storage size, a X% speed-up for retrieving the training data from memory, a X% reduction in data encoded in the NN input layer, and/or a X% reduction in size of the input layer itself (e.g., for a one-to-one mapping from input data to input layer nodes). Greater and smaller reductions in training data storage size may be caused by X% sparsification for a many-to-one and one-to-many training data to input node mapping, respectively. Sparsifying the input layer by X% may results in a X% speed up in training and prediction for that input layer and/or sparsifying the entire NN by Y% may results in a Y% speed up in training and prediction for the entire NN, with substantially the same or improved accuracy due to the elimination of poor quality data. Sparsifying the input layer by X% may also reduce NN size resulting in a significant speed-up (e.g., x%) depending on the NN architecture. As the proportion of sparsification increases, the quality of the eliminated data may increase from the relatively poorest quality to relatively better and better quality. Accordingly, training accuracy may generally increase (or remain approximately the same or reduce minimally) up to some threshold X% of eliminated nodes, such that above this threshold, relatively better quality data is increasingly eliminated resulting in a diminishing return in accuracy as X% rises above that threshold. Embodiments of the invention may thus tune the proportion X% of sparsification to approximate that threshold to optimize accuracy while maximizing storage size reduction and training speed, or above that threshold to further increase storage size reduction and training speed (e.g., below that threshold compromises both speed and accuracy). In other embodiments, the proportion of sparsification may be set based on tuning a desired or optimal accuracy reduction, storage size reduction and/or training/prediction speed-up.

In various embodiments, sparsification may occur only in the input layer, only in the hidden layers, or in a combination of the input layer and one or more hidden layers. The output layer is generally not sparsified to maintain all possible outputs mapped thereto (although may be in some cases e.g., if not predicted).

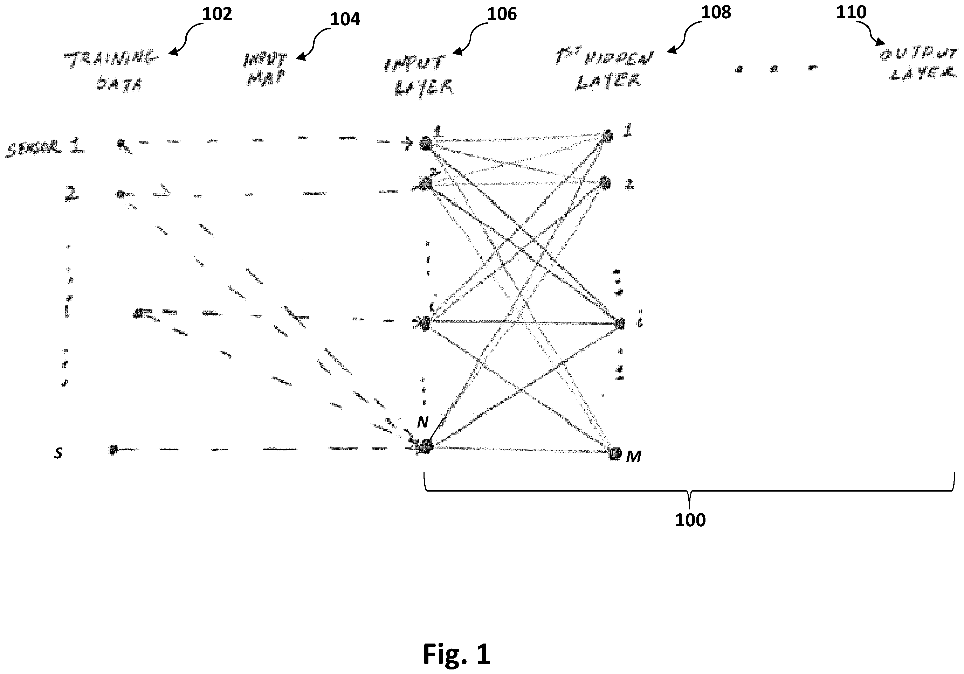

When sparsification occurs only in the input layer (and not in the hidden layers), the filter may exclude training data that is directly encoded, according to a single input map, in the eliminated nodes of the input layer. An input map transforms samples or instances of training data from predefined data sources (e.g., an ith image pixel or ith sensor reading of Fig. 1) to respectively associated nodes of the input layer (e.g., an ith node of the input layer of Fig. 1). The input map may be one-to-one, one-to-many, many-to-one and/or many-to-many, and may be surjective, injective and/or bijective. In an example of a one-to-one input map, sparsification that eliminates an nth input layer node may automatically trigger the filter to eliminate training data from an nth data source encoded therein. In an example of a many-to-one input map, sparsification that eliminates an nth input layer node may automatically trigger the filter to eliminate training data from a plurality of data sources encoded therein (such as, image pixels or sensor readings m, m+1, m+2,...). In an example of a many-to-one or many-to-many input map (e.g., as shown from multiple sensors 1-S to multiple input layer nodes 1-N in Fig. 1), sparsification that eliminates an above threshold cumulative number of input layer nodes or input layer nodes associated with an above threshold cumulative score may automatically trigger the filter to eliminate training data from one or more data sources encoded therein.

In contrast to the input layer, training data is typically mapped indirectly to hidden layer nodes, so the relationship between sparsifying hidden layer nodes and eliminating training data is typically complex (e.g., not one-to-one, injective and/or surjective). In some embodiments, training data encoded in an input layer node may be filtered, even when the input layer node is not eliminated, when some or all of the hidden layer nodes branching from that root input layer node cumulatively have a pattern of elimination or sufficiently low weights indicating propagation of poor quality training data encoded therein. In some embodiments, a filter score may be computed to measure the cumulative weights connecting hidden layer nodes branching from a root input layer node to determine whether or not to filtering training data mapped to that root input layer node. The filter score may be a weighted sum of factors (e.g., connection weights or channel filters) of all or some of the hidden layer nodes branching from the root input node. In some embodiments, each branching hidden layer node may be weighted with a weight diminishing based on its distance (e.g., inversely proportional to the number of layers or nodes therebetween) from its root input node. In some embodiments, the weight or inclusion of intermediate nodes in the score depends on the type of neural network and/or connection types therebetween (e.g., recursively connected nodes may be weighted differently than skip or directly connected nodes). A filter threshold (e.g., an absolute value or relative value, such as, defining the m lowest scores) may be set to indicate when the collective contribution of the hidden layer nodes branching from the root input layer node have a cumulative neutral or adverse effect on training accuracy. When the filter score crosses the threshold, embodiments of the invention may filter training data encoded in the root input layer node from the training dataset. This filter threshold may be tuned to balance between data inclusion (e.g., eliminating relatively less training data) and efficiency (e.g., eliminating relatively more training data).

Various embodiments include sparsifying only the input layer and eliminating input data based only on the input map to the sparsified input layer, sparsifying multiple (all) layers (including the input and one or more hidden layers) but eliminating input data based only on the input map to the sparsified input layer, or sparsifying multiple (all) layers and eliminating input data based on the input map and/or filter score to the multiple (all) sparsified layers. In the middle embodiment, sparsifying hidden layers may improve the accuracy of sparsifying the input layer, while filtering training data based only on the sparsified input layer (ignoring the sparsified hidden layers) may increase the accuracy of filtering training data due to the direct and deterministic input map between training data and input layer nodes.

Various embodiments may apply one or more filters at various devices along the data collection and transmission path. In some embodiments, the filter may eliminate training data at the data source, before it is collected, by avoiding recording and/or storing those data at the recorder or memory, respectively. Additionally or alternatively, in some embodiments, the filter may eliminate input data at the storage stage by initially recording the filtered data and then subsequently deleting it from storage at the receiver device, another intermediate device along its transmission path to the training device or at the training device, prior to encoding the dataset into the input layer at the training device. Additionally or alternatively, in some embodiments, the filter may eliminate input data at the encoding stage (e.g., at the training device), for example, by storing but not encoding the eliminated training data in the input layer, creating a new input map or new encoding from the training data to the input layer that excludes the eliminated training data, or creating a new (e.g., more compact) architecture of fewer nodes in the input layer to eliminate nodes previously encoded by the eliminated training data. Additionally or alternatively, in some embodiments, an alert may be sent to a system indicating the problem training data, its source receiver, recorder or associated memory location(s). The alert may indicate a malfunctioning or redundant source of training data or its collection device. The training data or its source collection device may be eliminated from providing input data in future training or prediction phases and/or may be repaired to generate useful training data.

In some embodiments, source recording devices generating previously filtered neutral or adverse training data may be adjusted and modified (e.g., automatically and incrementally) to reintroduce their modified training data back into the neural network, for example, to improve the accuracy of the source recording devices and/or their training data. Previously eliminated nodes may be converted into reactivated nodes and the modified training data may be encoded at these reactivated nodes for further training or prediction. Adjustments may include changing recording parameters (e.g., color, contrast, point of view, frame border, regions monitored, etc. in images, detection sensitivity, trigger thresholds, recording times, etc. in sensors, and so on). Eliminated nodes may be reactivated individually or multiple/all simultaneously and reactivation may be triggered, e.g., periodically (e.g., every epoch) or upon receipt of a signal (e.g., from the data source device indicating the data is modified, improved or error is repaired). If the quality of the modified training data significantly improves, the reactivated nodes remain operational, whereas if the quality of the modified training data remains poor or worsens, the reactivated nodes are once again eliminated during ongoing sparsification. This process may repeat until the quality of the data collected by one or more or all source recording devices improves sufficiently to reactivate one or more or all of the eliminated input layer nodes in the neural network. Just as sparsification identifies a map to eliminate poor quality training data, reactivation (de-sparsification) provides a path to improving the quality of the training data.

In some embodiments, instead of eliminating training data entirely associated with one or more eliminated nodes, that training data may be reduced in impact, for example, used in fewer training iterations or epochs than training data encoded in non-eliminated nodes. For example, training data elimination may be measured based on multiple nodes (e.g., in the input layer only, or in combination with additional branching hidden layer nodes) in which the data is encoded. The training data may be eliminated from a number of training iterations or epochs proportional to the elimination node count, score or weights of its encoded nodes.

In some embodiments, filtered data may be visualized in the training dataset (e.g., marking image regions or sensor maps) to illustrate its poor quality data. For example, where the source training data comprises security camera video images, the neural network may be sparsified to eliminate input layer nodes that encode training data associated with e.g., a swaying bush that triggers false security alarms. The input map may be used to visualize by marking the source training images (e.g., with a color, pattern or border overlay) pixel regions that encode the eliminates nodes.

In one example, eliminating nodes encoded by an N pixel region in training images results in a reduction of N data points per training sample and a total training storage size reduction of N x number of training samples for a one-to-one input map between training data and input layer nodes. In another example, eliminating nodes encoded by one of M sensors results in a 1/M reduction per training sample and a total training storage size reduction of M x number of training samples for a one-to-one input map. Greater reductions in training storage size may be gained for a many-to-one input map between training data and input layer nodes and smaller reductions in training storage size may be gained for a one-to-many input map between training data and input layer nodes.

Eliminating nodes in the input layer may change the NN architecture, reducing the size of (e.g., number of nodes in) the input layer to exclude those eliminate nodes, which may in turn reduce the size of (e.g., number of nodes in) the hidden layer nodes connected thereto (e.g., by various degrees depending on the NN architecture and connection type), and exponentially reduce the number of weights connecting nodes in downstream hidden layers in the NN. This may cause an exponential speed up in training or prediction commensurate with the exponential reduction in NN weights based on the linear number of eliminated input layer nodes. Sparsifying hidden layers as well may accelerate this exponential speed-up in training or prediction.

Reference is made to Fig. **1,** which schematically illustrates data structures for sparsifying a neural network **100** input layer **106** to eliminate nodes neural or adverse to training accuracy and filter associated neural or adverse training data **102** from source recording devices encoded by an input map in the eliminated nodes, in accordance with some embodiments of the invention.

Neural network **100** includes a plurality of layers **106-110** of artificial neurons. Neural network **100** may include an input layer **106** (neurons 1-N), one or more middle, intermediate or hidden layer(s) **108** (neurons 1-M), and an output layer **110.** Each layer may have the same number of neurons (e.g., N=M) or different numbers of neurons (e.g., N≠M). Each neuron in each layer is connected by an artificial synapse connection to some neurons (partially-connected) or all neurons (fully-connected, as shown) in an adjacent layer, in non-adjacent layers (skip-connected), and/or that feed back to the same layer (recurrent-connected). Neural network **100** may be represented by a plurality of weights representing the strengths of the respective plurality of synapse connections.

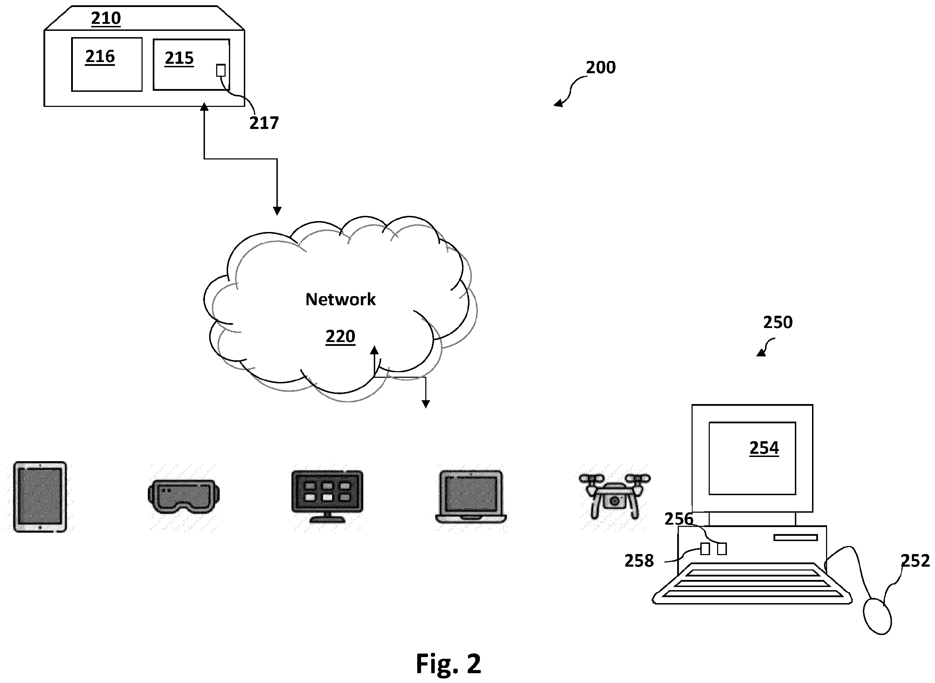

Input layer **106** may have an initial (e.g., non-sparsified) number of N nodes (e.g., neurons or weights connected to other nodes in one or more other hidden layers **108).** Training data **102** for neural network **100** may initially include instances of a plurality of S recorded input samples from one or more source recording devices (e.g., **250** of Fig. **2).** Input map **104** may encode those S initial instances of the plurality of recorded input samples from the training data **102** to collectively fully populate all of the initial number of N nodes of input layer **106.** Input map **104** may be one-to-one, one-to-many, many-to-one and/or many-to-many.

Neural network **100** may initially be a "dense" neural network, may subsequently be sparsified to become "sparse" through training, or may initially be a sparse neural network. A dense neural network or layer may refer to a neural network or layer, respectively, in which a majority or greater than or equal to a threshold percentage of neurons or channels in adjacent layers connected by synapse connections or filters (having non-zero connection weights). The threshold may be any percentage in a range of from greater than 50% (majority connected) to 100% ("fully-connected"), and is typically 90-99% connected. In the example shown in Fig. **1,** all neurons in adjacent layers are connected to each other, so neural network **100** is initially a dense fully-connected neural network. A sparse neural network or layer may refer to a neural network or layer, respectively, in which a minority or less than or equal to a threshold percentage of neurons or channels in adjacent layers are connected by synapse connections or filters (a majority or greater than a threshold percentage of neurons or channels in adjacent layers are not connected). The threshold may be any percentage in a range of less than 50% (minority connected) and may be 1-10% connected.

Embodiments of the invention may sparsify input layer **106,** eliminating one or more of its N nodes during a training phase. Sparsification of input layer **106** eliminates nodes that are typically, on average, encoded by training data **102** instances that have a neutral or adverse effect on training accuracy. Sparsifying input layer **106** to eliminate one or more nodes triggers filtering training dataset **102** to intentionally exclude future instances from the same source recording devices (that produced poor quality data) encoded by input map **104** in the eliminated nodes (neutral or adverse to training) of the neural network. Once input layer **106** eliminates neutral or adverse nodes and training data **102** filters neutral or adverse training data encoded therein, embodiments of the invention may encode subsequent instances of the plurality of recorded input samples of the filtered training dataset **102** mapped by input map **104** to remaining nodes not eliminated in the sparsified input layer **106** (and not encode subsequent instances of the plurality of recorded input samples of the filtered training dataset **102** mapped by input map **104** to the nodes eliminated in the sparsified input layer **106)** to train the neural network in a subsequent training phase or to predict an output of the neural network in a prediction phase. Subsequent training may thus eliminate encoding future instances of training dataset **102** from source recording devices with previous instances that had a neutral or adverse effect on training accuracy.

Sparsification may eliminate nodes in only the input layer **106** and/or additionally in one or more hidden layers **108.** When hidden layers **108** are sparsified, they may be sparsified together with, or in a separate sparsification process than, input layer **106.** In some embodiments, when hidden layers **108** are also sparsified, training data **102** may be filtered to exclude subsequent source device instances encoded only in the eliminated nodes of the input layer **106,** or encoded in a root input layer node that is not eliminated but that has a plurality of hidden layer nodes branching therefrom that are eliminated or have cumulative strength of connection that is below or outside of a threshold.

In some embodiments, after being excluded, data from previously eliminated nodes and source devices, may be reintroduced into training dataset **102,** e.g., to accommodate improved training data, source device performance, a desire to increase training data storage size (e.g., if more storage space becomes available), or for any other reason. In some embodiments, data from previously eliminated nodes and sources may be reintroduced by un-sparsifying or reactivating previously sparsified nodes in input layer **106.** Once reactivated, the previously eliminated nodes are subsequently encoded by training data mapped thereto from source devices. In some embodiments, the training data may be modified or improved by adjusting recording parameters of one or more of the source recording devices to modify one or more of the excluded recorded input samples encoded in the reintroduced un-sparsified nodes.

In some embodiments, neural network **100** may be a convolutional neural network (CNN). A convolutional neural network includes a plurality of neuron channels in one or more neuron layers, each neuron channel comprising a plurality of artificial neurons. The convolutional neural network may be represented by a plurality of convolutional filters, each convolutional filter comprising a plurality of weights representing a unique connection between the neurons of an input channel of an input layer and the neurons of a convolutional channel of a convolutional layer. Sparsification of the input layer of the convolutional neural network may comprise eliminating one or more input layer neuron(s) (e.g., groups of neurons connected by the same filter), convolutional filter(s), or channel(s).

In one example, CNN may have an input layer that represents a color image and has three color-channels (e.g., red, green and blue channels). CNN may be represented by a plurality of convolution filters. Each filter may represent a group of a plurality of weights that are the convolution or transformation of regions of neurons (e.g., representing an NxN pixel image region) of one channel to neurons in a channel of an (adjacent or non-adjacent) convolution layer. An example 2D convolution filter includes a set of NxN weights (e.g., a,b,c,...) such that it convolves each NxN group of neurons (e.g., 1,2,3,...NN) in an input channel (e.g., 1a+2b+3c+...) to equal a single connected convolution neuron in a convolution channel. The same single convolution filter of NxN weights is used to convolve all NxN groups of neurons throughout the input channel. In general, convolution filter may have various dimensions including one-dimensional (1D) (e.g., a 1xN row filter or Nx1 column filter operating on a column or row of neurons), two-dimensional (2D) (e.g., a NxM filter operating on a 2D grid of neurons), three-dimensional (3D) (e.g., a NxMxP filter operating on a grid over multiple channels in a layer), ..., or N-dimensional (ND) (e.g., operating on a grid over multiple channels and multiple layers). Computing weights for a typical number of hundreds or thousands of convolutions filters is a complex and time-consuming task.

According to embodiments of the invention, sparsifying the convolutional neural network by eliminating one or more nodes to identify and eliminate poor quality training data encoded in the input layer of the convolutional neural network during a training phase improves accuracy and speeds-up training and/or prediction of the CNN.

It will be appreciated by persons of ordinary skill in the art that the arrangement of data structures in Fig. **1** is an example only and other numbers, sizes, dimensions and configurations of neurons, synapse connections, and layers may be used.

**Compact Data Representation:** According to some embodiments of the invention, there is provided a compact data representation for efficiently representing a sparse input layer **106** and/or one or more hidden layers **108** of neural network **100** that eliminates storing and processing eliminated nodes. The compact representation may be used to represent and store the sparsified neural network as described in U.S. Patent No. 11,580,352 issued on February 14, 2023, which is hereby incorporated by reference in its entirety. The compact representation may store each of the plurality of weights of the sparse neural network or layer with an association to a unique index. The unique index may uniquely identify a pair of artificial neurons that have a connection represented by the weight. Only non-zero weights may be stored that represent connections between pairs of neurons (and zero weights may not be stored that represent no connections between pairs of neurons).

This compact representation of sparse neural networks or layers is provided according to some embodiments of the invention that independently indexes each weight (independently defines which synapse the weight represents), which allows weights of eliminated nodes or synapses to be skipped or discarded. In conventional matrix representation, each weight is indexed by its position in the matrix (e.g., a weight in row I column j represents the synapse connecting the ith neuron in a first layer to a jth neuron in a second layer). Additional matrices may be used to store weights for each pair of layers. Because indexing is based on matrix position, weights cannot be eliminated as they would shift the position of other weights in the matrix. This causes a sparse neural network or layer to be represented by a sparse matrix or vector of mostly zero entries, which is a waste of both memory for storing mostly zero weights and computations for multiplying the zero weights. By independently indexing each weight according to embodiments of the invention, the indices of weights do not depend on each other, and so each eliminated weight may be discarded entirely without affecting the indexing of other weights. This independent indexing thereby eliminates the need to store entries for eliminated or disconnected synapses (reducing memory consumption) and eliminates computations performed based on eliminated or disconnected synapses (increasing processing speed). Because the speed of running a neural network is proportional to the number of weights or nodes therein, a sparse neural network according to embodiments of the invention with only a fraction of adjacent neurons connected by weights will run in a fraction of the time as does a fully connected neural network.

**Triplet Representation Instead of Matrix Representation:** In an embodiment of the invention, a conventional matrix representation of weights (Table **1)** is replaced with a "triplet representation" of weights in a neural network (Table **2).** The following example illustrates the differences between representing 12 weights in matrix representation as a matrix of size 4x3 and in triplet representation as 12 independent entries:

Table **1.** Dense Matrix
Representation

| 1.5 | -0.5 | -0.1 |
|---|---|---|
| 0.2 | 0.6 | -1.2 |
| 0.4 | -0.4 | 0.9 |
| -0.6 | 1.3 | 1.0 |

Table **2.** Dense Triplet Representation

| Row | Column | Value |
|---|---|---|
| 0 | 0 | 1.5 |
| 0 | 1 | -0.5 |
| 0 | 2 | -0.1 |
| 1 | 0 | 0.2 |
| 1 | 1 | 0.6 |
| 1 | 2 | -1.2 |
| 2 | 0 | 0.4 |
| 2 | 1 | -0.4 |
| 2 | 2 | 0.9 |
| 3 | 0 | -0.6 |
| 3 | 1 | 1.3 |
| 3 | 2 | 1.0 |

The matrix representation (Table **1**) includes a single value for each weight. The matrix representation identifies the pair of neurons connected by the weight based on the weight's position in the matrix. For example, the row index represents the neuron ID or index in a first layer and the column index represents the neuron ID or index in a second layer.

The triplet representation also lists the weight values (Table **2,** column 3), and in addition independently indexes each weight with two values, e.g., "from" and "to" neuron IDs, identifying the pair of neurons connected by the weight (Table **2,** columns 1 and 2). The triplet representation for standard NNs may be modified for convolutional NNs by replacing the neuron indices (columns 1 and 2) with channel indices, and replacing individual neuron weights (column 3) with the plurality of weights of filters.

The triplet representation is counterintuitive because, on its face, it appears inefficient and wasteful, requiring three times more memory (e.g., 36 entries) as compared to the matrix representation (e.g., 12 entries). And indeed, triplet representation does use more memory than matrix representation when the neural network or layer is dense (speed remains the same or worse). However, despite the inefficiency in dense neural networks, the sparser the neural network or layer is, the greater the advantage of triplet representation becomes. In one example, there is a tipping point of 50% sparsity, above which triplet representation is more compact and below which matrix representation is more compact (for processing speed, a sparser neural network or layer using this representation will always be faster than a denser neural network or layer, regardless of the level of sparsity). In one embodiment, both matrix and triplet representation may be used according to sparsity levels to use the representation that is most compact for that level. In other embodiments, triplet representation may be exclusively used to represent neural networks.

An example of the benefit of triplet representation over matrix representation for sparse neural networks and layers is shown in Tables **3** and **4** below. Tables **3** and **4** below show a pruning of the weights in Tables **1** and **2**, setting 18 of the 20 values thereof to zero. The matrix representation and triplet representation of the resulting sparse neural network and its layers is shown respectively as follows:

Table **3**. Sparse Matrix Representation

| 0 | 0 | 0 |
|---|---|---|
| 0.2 | 0 | 0 |
| 0 | 0 | 0.9 |

| 0 | 0 | 0 |
|---|---|---|

Table **4**. Sparse Triplet Representation

| Row | Column | Value |
|---|---|---|
| 1 | 0 | 0.2 |
| 2 | 2 | 0.9 |

In the above case, the triplet representation requires half the memory of matrix representation. Further, the triplet representation of the neural network runs ten times computationally faster than the matrix representation because the triplet representation stores only two weights (resulting in two computations) whereas the matrix representation stores twenty weights (resulting in 20 computations).

For each individual weight, although the triplet has three times more values (index *i*, index j, value) than the corresponding single weight value in the matrix representation, in one example, each index values only requires half the information as the weight value, resulting in a total memory increase by only a factor of two. For example, the triplet may be represented by:

- 32 bit floating point for the weight value
- 16 bit integer for "from" neuron ID
- 16 bit integer for "to" neuron ID

This triplet has a total of 64 bits per weight, which is twice the memory space as required in the matrix representation of 32 bits per weight. In general, in this example, a neural network with M times fewer weights may have a M times speed increase in computational speed, and a M/2 times reduction in memory usage using this example triplet representation as compared to using a matrix representation.

It may be appreciated that "triplet" representation is only an example of independently indexing weights and any other index or representation of the connected neurons may be used. In another example, a "doublet" representation may be used comprising a single weight value and a single index value, where all pairs of neurons (or filters in CNNs) have a single index value that is a unique identifier (e.g., 1-12 in Figs. **1-2).** In another example, a "quartet" or "quintet" representation may be used adding a value to index the "From" and/or "To" layer indices or channel indices (for CNNs).

**Inducing Sparsity During Training:** Several techniques for sparsifying a neural network may be used to induce sparsity to eliminate nodes in the input layer (and/or hidden layers) during training including any combination of one or more of: $L_1$ regularization, $L_p$ regularization, thresholding, random zero-ing, new weight generation, evolving weights using genetic algorithms, and bias based pruning.

*$L_1$* **Regularization:** Some embodiments of the invention may eliminate nodes (e.g., prune neuron connections) using $L_1$ regularization during neural network training in each of one or more iterations (e.g., in addition to weight correcting updates such as backpropagation). The weights $w_{ij}$ of the neural network may be updated to weights $w_{ij}'$ in each training iteration, for example, as follows:

$$w'_{ij} = w_{ij} - sgn(w_{ij}) * d$$

Where *d* is a "weight decay" parameter (typically a very small number) and *sgn* is the sign function. In other words, at each weight update, the value of the weight is gradually decayed or driven towards zero. The larger the decay parameter (*d*) in the above equation, the faster the weights will approach zero, and the larger the portion of the weights that will become absolute zero, representing an eliminate node (e.g., disconnecting or pruning the weight between neurons or detaching a neuron from other neuron(s)).

In one embodiment, pruning may be performed using $L_1$ regularization with a modification: The moment a weight becomes zero (or changes sign), the weight's memory entry is physically removed or deleted from storage (from the triplet representation table), and cannot grow back or regenerate to a non-zero value in the future (e.g., at any future time or for a set lock-out period of time or number of iterations).

*$L_p$* **regularization:** $L_p$ regularization is an extension of $L_1$ regularization that can improve the desired behavior of "pushing" the weights in the network to zero, e.g., as follows:

$$w'_{ij} = w_{ij} - p * w_{ij}^{p-1} * d$$

where $d$ represents a speed of the drive or push to zero, and $p$ represents the power of the normalization factor in an $L_p$ normalization, which effectively represents the distribution of the values to which that drive is applied (e.g., $p$ is a positive value). In this example, a *higherp* shifts the drive to zero more towards higher weights, putting less pressure on lower weights. When regularizing convolutional layers, a whole filter may be regularized together as a unit, in which case, the above $L_p$ regularization may be modified, e.g., as follows:

$$w'_{ij} = w_{ij} - \frac{1}{\Sigma_{k=-r}^{r} w_{i+k,j+k}^{p}} * d$$

where $p$ is between 0 and 1, and where r is the radius of the kernel (a filter in a convolutional layer), e.g., the kernel is a matrix of size 2 * $r$ + 1. In this modified $L_p$ regularization, the more neighboring filters have zero values, the greater the pressure on the filter to zero. $L_p$ regularization allows a flexible dynamic pressure, where $p$ may be dynamically modified e.g., based on the percentage of sparsity, to push the derivative/norm of weights to zero. The above equations encourage weights to zero based on the values of the weights themselves and, for convolutional filters, based on the weights of neighboring weights in the same filter as well.

**Thresholding:** Weights and their entries may be physically deleted when the weight, though not zero, is below a near zero threshold:

$$if \left( w_{ij} < threshold \right) \rightarrow w_{ij} = 0$$

The threshold may be balanced to be sufficiently low to not undo error correction (e.g., backpropagation) during training, while being sufficiently high to prune at a reasonably fast rate and prevent that error correction from pulling values away from zero. Example thresholds include, but are not limited to, 0.1, 0.001, 0.0001, 0.00001, etc.

**Rounding:** Removes values after a pre-specified number of digits after the floating point. For example, given rounding at 5 digits, the value 0.12345678 is set to 0.12345. Rounding will zero a weight when the weight value is less than the minimum allowed by rounding. Otherwise, when rounding does not directly zero a weight, it may result in additional overall sparsity by disrupting some of the weight updates due to backpropagation. The pre-specified number of digits for rounding to may likewise be balanced to be sufficiently few to not undo error correction, while being sufficiently many to prevent that error correction from pulling values away from zero. Any integer number of digits after the floating point to which a weight is rounded may be used.

**Random zeroing:** Weights may be set to zero with either a fixed small probability (fully-random zeroing), or with a probability proportional to their current value (partially-random zeroing). In the latter case of partially-random zeroing the smaller the weight, the larger the probability of it becoming zero.

In general, any additional or alternative method of pruning that sets weights to zero or that decays weights to approach zero can be used here, including pruning randomly, probabilistically (e.g., with a probability proportional to their current value) and/or using mathematical or statistical heuristics.

**New Weight Generation:** Additionally or alternatively to setting weights to zero and deleting them from memory (pruning), some embodiments of the invention may randomly generate (create) new weights or connections that were not previously present. New weights may be generated randomly, probabilistically (e.g., the more the two neurons "fire together," the higher the probability that they would be connected and/or the higher the weight of that connection), and/or using mathematical or statistical heuristics.

**Evolving sparse neural networks:** Genetic algorithms (GA) may be used to train neural networks. GAs represent the set of weights of a neural network as an artificial "chromosome," e.g., where each chromosome represents one neural network. Genetic algorithms may evolve a population of such chromosomes by performing the steps of (a) measuring the fitness or accuracy of each chromosome (e.g., the lower the average loss over the training set, the better the fitness), (b) selecting the fitter chromosomes for breeding, (c) performing recombination or crossover between pairs of parent chromosomes (e.g., randomly choose weights from the parents to create the offspring), and (d) mutating the offspring. While GAs generally suffer from too much variability and volatility during training, the compact and fast representation of sparse neural networks disclosed herein may provide a balance to evolve neural networks efficiently. Alternatively or additionally, genetic programming (GP) could be used as well. GP works in a similar way to GA, with the difference that instead of representing the neural network as a chromosome, it is represented as a "tree". Thus, the neural network architecture (the layers and their connections) could be represented and evolved as a GP tree. While GA typically assumes a fixed number of layers and neurons (and evolves only the connections), GP may evolve the number of layers, number of neurons, and/or their connections. As a further additional or alternative method for evolving the neural network architecture, reinforcement learning may also be applied, where a single instance of the neural network architecture is stochastically modified in order to maximize the overall accuracy.

**Bias based neuron pruning:** A bias unit may "bias" the weights of a neuron during training by adding a constant value to all of the neuron's weights. If a bias value is low enough (e.g., a large magnitude negative value), the bias unit may shift all the neuron's weights to a negative value. The bias unit may eliminate any output from neuron, e.g., with an activation function such as rectified linear unit (RELU), in which all negative or below threshold values are zeroed out. In effect, this turns the whole neuron off, pruning such a neuron in its entirety from the network, including all of its incoming and outgoing weights. This can be achieved by regularization methods e.g. disclosed herein, but in this case pushing the value to a negative or below threshold target instead of zero.

Other techniques for inducing sparsity to eliminate nodes in the input layer (and/or hidden layers) may be additionally, or alternatively, used.

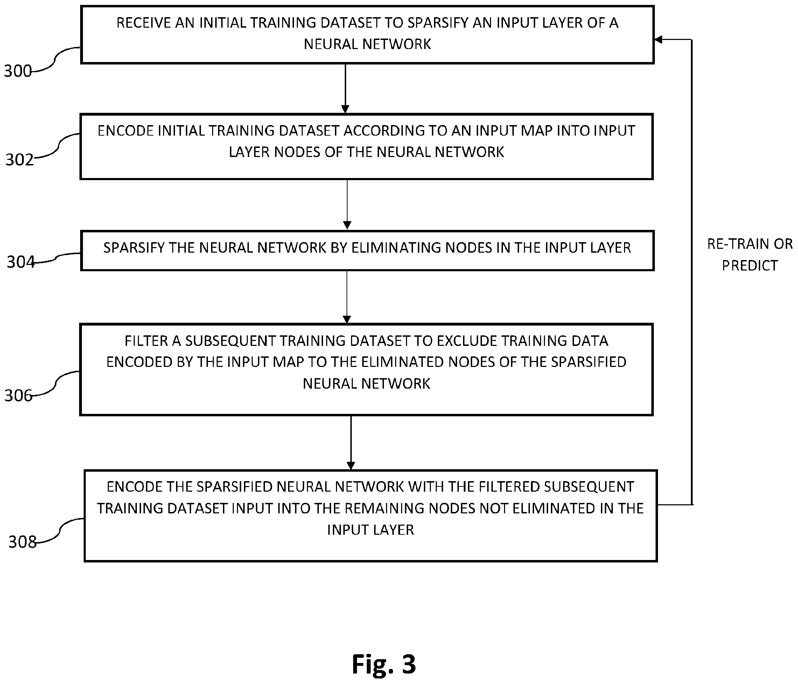

Reference is made to Fig. **2,** which schematically illustrates a system **200** for sparsifying a neural network to eliminate nodes in the input layer to filter training data mapped to the eliminated nodes, according to an embodiment of the invention. System **200** may store and/or generate the data structures and implement the sparsification of neural networks and filtering of training data described herein, e.g., in reference to Figs. **1** and **3.**

System **200** may include one or more local endpoint device(s) **250** and one or more remote server(s) **210** accessible to the local device via a network **220** or computing cloud. Typically, the neural network is trained by remote server **210** and run for prediction at one or more local endpoint devices **250,** although either remote server **210** and/or local endpoint devices **250** may train and/or predict using a sparse neural network according to embodiments of the invention. When local endpoint devices **250** perform training and runtime prediction, remote server **210** may be removed.

In some embodiments, remote server **210** may have specialized hardware including a large memory **215** for storing a neural network and a specialized processor **216** (e.g., a GPU), for example, when a dense neural network is used. Memory **215** may store data **217** including a neural network (e.g., **100** of Fig. **1)** and a training dataset (e.g., **102** of Fig. 1). The neural network may include a plurality of layers, each layer comprising a plurality of nodes, each node connected by a plurality of weights to a respective plurality of nodes in one or more different layers of the plurality of layers. In a convolutional neural network, the nodes may represent channels of neurons, and each channel of neurons may be connected by one or more filter(s) of weights to a respective channel of neurons in one or more different layers of the plurality of layers. The training dataset may include initial instances of a plurality of recorded input samples from one or more source recording devices, e.g., **250.** Data **217** may also include code (e.g., software code) or logic, e.g., to execute embodiments of the invention and enable storage and retrieval of data **217** according to embodiments of the invention.

Remote server **210** and/or local endpoint devices **250** may encode the initial instances of the plurality of recorded input samples, according to an input map (e.g., **104** of Fig. **1),** from the training dataset to a plurality of respective nodes in an input layer of the plurality of layers of the neural network. Remote server **210** and/or local endpoint devices **250** may sparsify the neural network by eliminating one or more nodes in the input layer of the neural network during a training phase. Remote server **210** and/or local endpoint devices **250** may filter the training dataset to exclude subsequent instances of one or more of the recorded input samples from one or more of the source recording devices encoded by the input map to the eliminated nodes of the sparsified neural network. Remote server **210** and/or local endpoint devices **250** may encode subsequent instances of the plurality of recorded input samples of the filtered training dataset to remaining nodes not eliminated in the input layer of the sparsified neural network to train the neural network in a subsequent training phase or to predict an output of the neural network in a prediction phase.

Local endpoint device(s) **250** may each include one or more memories **258** for storing a neural network according to a data representation (e.g., **100** of Fig. **1)** provided in some embodiments of the invention. Memory **258** may store each of a plurality of nodes of the neural network, e.g., according to a compact data representation, in which each node is associated with a unique index. Local endpoint device(s) **250** may each include one or more processor(s) **256** for training, and/or executing prediction based on, the nodes of the neural network stored in memory **258.** During prediction, the neural network is run forward once. During training, a neural network is run twice, once forward to generate an output and once backwards for error correction (e.g., backpropagation). Each time the neural network is run, the number of computations is reduced in proportion to the eliminated nodes of the input and/or hidden layers and the reduced storage size of the training dataset and the speed is increased proportionally to the reduction in the number of nodes in the neural network. For a sparse neural network with X% sparsity, processor(s) **256** may run neural network (100/(100-X) times faster (with X% fewer computations).

Local endpoint device(s) **250** may include smart devices, personal computer, desktop computer, mobile computer, laptop computer, and notebook computer or any other suitable device such as a cellular telephone, personal digital assistant (PDA), video game console, etc., and may include wired or wireless connections or modems. Local endpoint device(s) **250** may include one or more input device(s) **252** for receiving input from a user (e.g., neural network parameters, such as, numbers, sizes, dimensions and configurations of neurons, synapses, and layers, accuracy or training thresholds, etc.). Local endpoint device(s) **250** may include one or more output device(s) **254** (e.g., a monitor or screen) for displaying data to a user generated by computer **250** or database **210.** In various applications, local endpoint device(s) **250** is part of a system for image recognition, computer vision, virtual or augmented reality, speech recognition, text understanding, or other applications of deep learning. In the application of facial recognition, a device may use the sparse neural network to efficiently perform facial recognition to trigger the device to unlock itself or a physical door when a match is detected. In the application of security, a security camera system may use the sparse neural network to efficiently detect a security breach and sound an alarm or other security measure. In the application of autonomous driving, a vehicle computer may use the sparse neural network to control driving operations, e.g., to steer away to avoid a detected object.

Network **220,** which connects local endpoint device(s) **250** and remote server **210,** may be any public or private network such as the Internet. Access to network **220** may be through wire line, terrestrial wireless, satellite or other systems well known in the art.

Local endpoint device(s) **250** and remote server **210** may include one or more controller(s) or processor(s) **256** and **216,** respectively, for executing operations according to embodiments of the invention and one or more memory unit(s) **258** and **215,** respectively, for storing data **217** and/or instructions (e.g., software for applying methods according to embodiments of the invention) executable by the processor(s). Processor(s) **256** and **216** may include, for example, a central processing unit (CPU), a graphical processing unit (GPU, a field-programmable gate array (FPGA), an application-specific integrated circuit (ASIC), a digital signal processor (DSP), a microprocessor, a controller, a chip, a microchip, an integrated circuit (IC), or any other suitable multi-purpose or specific processor or controller. Memory unit(s) **258** and **215** may include, for example, a random access memory (RAM), a dynamic RAM (DRAM), a flash memory, a volatile memory, a non-volatile memory, a cache memory, a buffer, a short term memory unit, a long term memory unit, or other suitable memory units or storage units.

Other devices and configurations may be used, for example, data **217** may be stored in memory **258** and no separate server **210** may be used.

Reference is made to Fig. **3,** which is a flowchart of a method for sparsifying a neural network to eliminate nodes in the input layer to filter training data mapped to the eliminated nodes, in accordance with some embodiments of the invention. The operations of Fig. **3** may be executed by a processor (e.g., one or more processor(s) **256** of Fig. **2**) using data stored in a memory (e.g., one or more memory unit(s) **258** of Fig. **2**).

In operation **300,** a processor may generate or receive and store a neural network and a training dataset in the memory. The neural network may include a plurality of layers, each layer comprising a plurality of nodes (e.g., neurons or channels of neurons), each node connected by a plurality of weights (e.g., individual weights or convolutional filters of multiple weights) to a respective plurality of nodes in one or more different layers of the plurality of layers. The neural network may be initially dense or sparse (having a respective majority or minority of connected non-eliminated nodes). The training dataset may include initial instances of a plurality of recorded input samples from one or more source recording devices (e.g., **250** of Fig. **2**). Examples of a neural network **100** and a training dataset **102** are described in reference to Fig. **1.**

In operation **302,** a processor may encode the initial instances of the plurality of recorded input samples, according to an input map (e.g., **104** of Fig. **1),** from the training dataset to a plurality of respective nodes in an input layer (e.g., **106** of Fig. **1)** of the plurality of layers of the neural network.

In operation **304,** a processor may sparsify the neural network by eliminating one or more nodes in the input layer of the neural network during a training phase. In some embodiments, a processor may sparsify only the input layer but not the hidden layers in the neural network, and filter the training dataset to exclude subsequent instances directly encoded, e.g., according to the input map, only in the eliminated nodes of the input layer. Alternatively, a processor may sparsify one or more hidden layers (in addition to the input layer) in the neural network. The processor may then filter the training data to exclude subsequent instances encoded in a root input layer node that is not eliminated, for example, which has a plurality of hidden layer nodes branching therefrom that are eliminated or have cumulative unsatisfactory strength of connection. In some embodiments, the cumulative strength of connection of the plurality of branching hidden layer nodes is a weighted sum of neuron weights or channel filters along paths originating at the root input layer node and connecting the hidden layer nodes branching therefrom.

The processor may eliminate nodes of the neural network during and/or after a training phase of the neural network. The processor may prune weights using L1 regularization, thresholding, rounding, and/or random zeroing. The processor may eliminate nodes randomly, probabilistically, and/or heuristically. The processor may generate one or more new nodes in the sparse neural network by connection creation. New nodes may be generated randomly, probabilistically, and/or heuristically. In some embodiments, the sparse neural network may be evolved using evolutionary computation (genetic algorithms or genetic programming) or using reinforcement learning.

In some embodiments, a processor may store a compact representation of the neural network by storing each of a plurality of the nodes of the sparsified neural network with an association to a unique index. The unique index may uniquely identify the node, wherein only nodes with non-zero weights are stored that are not eliminated and nodes with zero weights are not stored that represent eliminated nodes.

In operation **306,** a processor may filter the training dataset to exclude subsequent instances of one or more of the recorded input samples from one or more of the source recording devices encoded by the input map to the eliminated nodes of the sparsified neural network. In some embodiments, the processor may filter the training dataset by avoiding recording or storing the one or more recorded input samples at the one or more source recording devices (e.g., in one or more memory unit(s) **258** of devices **250** of Fig. 2). In some embodiments, the processor may filter the training dataset after recording by the one or more source recording devices by deleting the one or more recorded input samples at a receiver (e.g., devices **210** of Fig. **2)** prior to encoding the training dataset into the input layer.

In operation **308,** a processor may encode subsequent instances of the plurality of recorded input samples of the filtered training dataset to remaining nodes not eliminated in the input layer of the sparsified neural network to train the neural network in a subsequent training phase or to predict an output of the neural network in a prediction phase.

In some embodiments, after operation **308,** a processor may re-train or predict an output of the neural network using the filtered training dataset encoded in the sparsified input layer. The filtered training dataset may be reset as the initial dataset and the filtering process may iterate until a termination condition is met, e.g., an optimal accuracy threshold is met, an above threshold proportion of the input layer is sparsified, an above threshold proportion of the training data is filtered. In some embodiments, filtering data reduces the training data storage size, while in other embodiments, filtered training data is replaced by new training data to preserve the training data storage size.

In some embodiments, a processor may automatically or manually attempt to repair or improve the quality and effect on training accuracy of data from the source recording devices. In some embodiments the processor may adjust recording parameters of one or more of the source recording devices to modify one or more of the excluded recorded input samples encoded in the eliminated nodes. The processor may then reactivate the eliminated nodes by encoding the modified recorded input samples therein for further training or prediction. The reactivated nodes may remain activated or may once again be eliminated depending on if the adjustment sufficiently improved the accuracy effect on the training data. Adjustments may be executed iteratively, e.g., periodically or upon trigger conditions.

In some embodiments, a processor may transmit a signal indicating an error or poor quality training data to a device along a transmission path from the one or more source recording devices to a neural network training device.

In some embodiments, a processor may mark a visualization of the training dataset to illustrate the excluded recorded input samples encoded by the input map to the eliminated nodes of the sparsified neural network (e.g., marking training data image regions or sensor maps) to illustrate its poor quality data).

Other operations or orders of operations may be used. For example, the processor may skip the re-training or prediction phase.

It will be appreciated that filtering training data encoded at eliminated weights means filtering future instances of data from source devices whose previous instances were encoded at those weights prior to their elimination.

All descriptions of non-convolutional network operation (e.g., to their neurons and synapse connections/weights) applies equally to convolutional network operation (e.g., to their channels and filters, respectively). It will be appreciated that eliminating a node may refer to eliminating a weight or filter between neurons or channels or eliminating the neurons or channels themselves, respectively. Discussion of either embodiment (e.g., weight) applies equally to the other embodiment (e.g., neuron, and vice versa).

In the foregoing description, various aspects of the present invention are described. For purposes of explanation, specific configurations and details are set forth in order to provide a thorough understanding of the present invention. However, it will also be apparent to persons of ordinary skill in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

The aforementioned flowchart and block diagrams illustrate the architecture, functionality, and operation of possible implementations of systems and methods according to various embodiments of the present invention. In this regard, each block in the flowchart or block diagrams may represent a module, segment, or portion of code, which may comprise one or more executable instructions for implementing the specified logical function(s). In some alternative implementations, the functions noted in the block may occur out of the order noted in the figures or by different modules. Unless explicitly stated, the method embodiments described herein are not constrained to a particular order or sequence.

Additionally, some of the described method embodiments or elements thereof can occur or be performed at the same point in time. Each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Embodiments of the invention may include an article such as a non-transitory computer or processor readable medium, or a computer or processor non-transitory storage medium, such as for example a memory (e.g., memory units **215** or **258** of Fig. **2)**, a disk drive, or a USB flash memory, encoding, including or storing instructions, e.g., computer-executable instructions, which, when executed by a processor or controller (e.g., processor **256** of Fig. **2),** carry out methods disclosed herein.

In the above description, an embodiment is an example or implementation of the inventions. The various appearances of "one embodiment," "an embodiment" or "some embodiments" do not necessarily all refer to the same embodiments. Although various features of the invention may be described in the context of a single embodiment, the features of embodiments may also be provided separately or in any suitable combination. Conversely, although the invention may be described herein in the context of separate embodiments for clarity, the invention may also be implemented in a single embodiment. Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions. It will further be recognized that the aspects of the invention described hereinabove may be combined or otherwise coexist in embodiments of the invention.

The descriptions, examples, methods and materials presented in the claims and the specification are not to be construed as limiting but rather as illustrative only. While certain features of the present invention have been illustrated and described herein, many modifications, substitutions, changes, and equivalents may occur to those of ordinary skill in the art. It is, therefore, to be understood that the appended claims are intended to cover all such modifications and changes as fall with the true spirit of the invention.

While the invention has been described with respect to a limited number of embodiments, these should not be construed as limitations on the scope of the invention, but rather as exemplifications of some of the preferred embodiments. Other possible variations, modifications, and applications are also within the scope of the invention. Different embodiments are disclosed herein. Features of certain embodiments may be combined with features of other embodiments; thus certain embodiments may be combinations of features of multiple embodiments.

The subject matter of the following clauses also forms part of the present disclosure:

**CLAUSES**

1. A method for filtering a neural network training dataset, the method comprising:

receiving a neural network comprising a plurality of layers, each layer comprising a plurality of nodes, each node connected by a plurality of weights to a respective plurality of nodes in one or more different layers of the plurality of layers;
receiving a training dataset comprising initial instances of a plurality of recorded input samples from one or more source recording devices;
encoding the initial instances of the plurality of recorded input samples, according to an input map, from the training dataset to a plurality of respective nodes in an input layer of the plurality of layers of the neural network;
sparsifying the neural network by eliminating one or more nodes in the input layer of the neural network during a training phase;
filtering the training dataset to exclude subsequent instances of one or more of the recorded input samples from one or more of the source recording devices encoded by the input map to the eliminated nodes of the sparsified neural network; and
encoding subsequent instances of the plurality of recorded input samples of the filtered training dataset to remaining nodes not eliminated in the input layer of the sparsified neural network to train the neural network in a subsequent training phase or to predict an output of the neural network in a prediction phase.

2. The method of Claim 1 comprising:

adjusting recording parameters of one or more of the source recording devices to modify one or more of the excluded recorded input samples encoded in the eliminated nodes; and
reactivating the eliminated nodes by encoding the modified recorded input samples therein for further training or prediction.

3. The method of Claim 1, wherein sparsifying occurs in the input layer but not in hidden layers in the neural network; and

the training dataset is filtered to exclude subsequent instances directly encoded, according to the input map, only in the eliminated nodes of the input layer.

4. The method of Claim 1, comprising sparsifying one or more hidden layers in the neural network; wherein the training data is filtered to exclude subsequent instances encoded in a root input layer node that is not eliminated, which has a plurality of hidden layer nodes branching therefrom that are eliminated or have cumulative unsatisfactory strength of connection.

5. The method of Claim 4, wherein the cumulative strength of connection of the plurality of branching hidden layer nodes is a weighted sum of neuron weights or channel filters along paths originating at the root input layer node and connecting the hidden layer nodes branching therefrom.

6. The method of Claim 1, wherein the training dataset is filtered by avoiding recording or storing the one or more recorded input samples at the one or more source recording devices.

7. The method of Claim 1, wherein the training dataset is filtered after recording by the one or more source recording devices by deleting the one or more recorded input samples at a receiver prior to encoding the training dataset into the input layer.

8. The method of Claim 1, comprising transmitting a signal indicating an error or poor quality training data to a device along a transmission path from the one or more source recording devices to a neural network training device.

9. The method of Claim 1, comprising marking a visualization of the training dataset to illustrate the excluded recorded input samples encoded by the input map to the eliminated nodes of the sparsified neural network.

10. The method of Claim 1, wherein the neural network is a convolutional neural network, the nodes represent channels of neurons, and each channel of neurons in the input layer is connected by a convolutional filter of weights to a channel of neurons in one or more different hidden layers.

11. The method of Claim 1, comprising storing each of a plurality of the nodes of the neural network with an association to a unique index, the unique index uniquely identifying the node, wherein only nodes with non-zero weights are stored that are not eliminated and nodes with zero weights are not stored that represent eliminated nodes.

12. A system for efficiently storing a sparse neural network, the system comprising:

one or more memories configured to store:

a neural network comprising a plurality of layers, each layer comprising a plurality of nodes, each node connected by a plurality of weights to a respective plurality of nodes in one or more different layers of the plurality of layers,
a training dataset comprising initial instances of a plurality of recorded input samples from one or more source recording devices; and

one or more processors configured to:

encode the initial instances of the plurality of recorded input samples, according to an input map, from the training dataset to a plurality of respective nodes in an input layer of the plurality of layers of the neural network,
sparsify the neural network by eliminating one or more nodes in the input layer of the neural network during a training phase,
filter the training dataset to exclude subsequent instances of one or more of the recorded input samples from one or more of the source recording devices encoded by the input map to the eliminated nodes of the sparsified neural network, and
encode subsequent instances of the plurality of recorded input samples of the filtered training dataset to remaining nodes not eliminated in the input layer of the sparsified neural network to train the neural network in a subsequent training phase or to predict an output of the neural network in a prediction phase.

13. The system of claim 12, wherein the one or more processors are configured to:
adjust recording parameters of one or more of the source recording devices to modify one or more of the excluded recorded input samples encoded in the eliminated nodes, and
reactivate the eliminated nodes by encoding the modified recorded input samples therein for further training or prediction.

14. The system of claim 12, comprising filtering the training dataset by avoiding recording or storing the one or more recorded input samples at the one or more source recording devices.

15. The system of claim 12, comprising filtering the training dataset after recording by the one or more source recording devices by deleting the one or more recorded input samples at a receiver prior to encoding the training dataset into the input layer.

16. A non-transitory computer-readable storage medium having instructions stored thereon, which when executed, cause one or more processors to:

receive a neural network comprising a plurality of layers, each layer comprising a plurality of nodes, each node connected by a plurality of weights to a respective plurality of nodes in one or more different layers of the plurality of layers;

receive a training dataset comprising initial instances of a plurality of recorded input samples from one or more source recording devices;

encode the initial instances of the plurality of recorded input samples, according to an input map, from the training dataset to a plurality of respective nodes in an input layer of the plurality of layers of the neural network;

sparsify the neural network by eliminating one or more nodes in the input layer of the neural network during a training phase; and

filter the training dataset to exclude subsequent instances of one or more of the recorded input samples from one or more of the source recording devices encoded by the input map to the eliminated nodes of the sparsified neural network; and

encode subsequent instances of the plurality of recorded input samples of the filtered training dataset to remaining nodes not eliminated in the input layer of the sparsified neural network to train the neural network in a subsequent training phase or to predict an output of the neural network in a prediction phase.

17. The non-transitory computer-readable storage medium of claim 16, having further instructions stored thereon, which when executed, cause the one or more processors to:

adjust recording parameters of one or more of the source recording devices to modify one or more of the excluded recorded input samples encoded in the eliminated nodes; and

reactivate the eliminated nodes by encoding the modified recorded input samples therein for further training or prediction.

18. The non-transitory computer-readable storage medium of claim 16, wherein sparsifying occurs in the input layer but not in hidden layers in the neural network; and the non-transitory computer-readable storage medium has further instructions stored thereon, which when executed, cause the one or more processors to filter the training dataset to exclude subsequent instances directly encoded, according to the input map, only in the eliminated nodes of the input layer.

to predict an output of the neural network in a prediction phase.

19. The non-transitory computer-readable storage medium of claim 16, having further instructions stored thereon, which when executed, cause the one or more processors to:

sparsify one or more hidden layers in the neural network; and

filter the training data to exclude subsequent instances encoded in a root input layer node that is not eliminated, which has a plurality of hidden layer nodes branching therefrom that are eliminated or have cumulative unsatisfactory strength of connection.

20. The non-transitory computer-readable storage medium of claim 19, wherein the cumulative strength of connection of the plurality of branching hidden layer nodes is a weighted sum of neuron weights or channel filters along paths originating at the root input layer node and connecting the hidden layer nodes branching therefrom.

**Claims**

1. A method for filtering a neural network training dataset, the method comprising:

receiving a neural network comprising a plurality of layers, each layer comprising a plurality of nodes, each node connected by a plurality of weights to a respective plurality of nodes in one or more different layers of the plurality of layers;

receiving a training dataset comprising initial instances of a plurality of recorded input samples from one or more source recording devices;

encoding the initial instances of the plurality of recorded input samples, according to an input map, from the training dataset to a plurality of respective nodes in an input layer of the plurality of layers of the neural network;

sparsifying the neural network by eliminating one or more nodes in the input layer of the neural network during a training phase;

filtering the training dataset to exclude subsequent instances of one or more of the recorded input samples from one or more of the source recording devices encoded by the input map to the eliminated nodes of the sparsified neural network; and

encoding subsequent instances of the plurality of recorded input samples of the filtered training dataset to remaining nodes not eliminated in the input layer of the sparsified neural network to train the neural network in a subsequent training phase or to predict an output of the neural network in a prediction phase.

2.  The method of Claim 1 comprising:

adjusting recording parameters of one or more of the source recording devices to modify one or more of the excluded recorded input samples encoded in the eliminated nodes; and

reactivating the eliminated nodes by encoding the modified recorded input samples therein for further training or prediction.

3.  The method of Claim 1, wherein sparsifying occurs in the input layer but not in hidden layers in the neural network; and the training dataset is filtered to exclude subsequent instances directly encoded, according to the input map, only in the eliminated nodes of the input layer.

4.  The method of Claim 1, comprising sparsifying one or more hidden layers in the neural network;

wherein the training data is filtered to exclude subsequent instances encoded in a root input layer node that is not eliminated, which has a plurality of hidden layer nodes branching therefrom that are eliminated or have cumulative unsatisfactory strength of connection, and optionally,

wherein the cumulative strength of connection of the plurality of branching hidden layer nodes is a weighted sum of neuron weights or channel filters along paths originating at the root input layer node and connecting the hidden layer nodes branching therefrom.

5.  The method of Claim 1, wherein the training dataset is:

i) filtered by avoiding recording or storing the one or more recorded input samples at the one or more source recording devices; or

ii) filtered after recording by the one or more source recording devices by deleting the one or more recorded input samples at a receiver prior to encoding the training dataset into the input layer.

6.  The method of Claim 1, comprising transmitting a signal indicating an error or poor quality training data to a device along a transmission path from the one or more source recording devices to a neural network training device.

7.  The method of Claim 1, comprising marking a visualization of the training dataset to illustrate the excluded recorded input samples encoded by the input map to the eliminated nodes of the sparsified neural network.

8.  The method of Claim 1, wherein the neural network is a convolutional neural network, the nodes represent channels of neurons, and each channel of neurons in the input layer is connected by a convolutional filter of weights to a channel of neurons in one or more different hidden layers.

9.  The method of Claim 1, comprising storing each of a plurality of the nodes of the neural network with an association to a unique index, the unique index uniquely identifying the node, wherein only nodes with non-zero weights are stored that are not eliminated and nodes with zero weights are not stored that represent eliminated nodes.

10. A system for efficiently storing a sparse neural network, the system comprising:

one or more memories configured to store:

a neural network comprising a plurality of layers, each layer comprising a plurality of nodes, each node connected by a plurality of weights to a respective plurality of nodes in one or more different layers of the plurality of layers,

a training dataset comprising initial instances of a plurality of recorded input samples from one or more source recording devices; and

one or more processors configured to:

encode the initial instances of the plurality of recorded input samples, according to an input map, from the training dataset to a plurality of respective nodes in an input layer of the plurality of layers of the neural network,

sparsify the neural network by eliminating one or more nodes in the input layer of the neural network during a training phase,

filter the training dataset to exclude subsequent instances of one or more of the recorded input samples from one or more of the source recording devices encoded by the input map to the eliminated nodes of the sparsified neural network, and

encode subsequent instances of the plurality of recorded input samples of the filtered training dataset to remaining nodes not eliminated in the input layer of the sparsified neural network to train the neural network in a subsequent training phase or to predict an output of the neural network in a prediction phase.

11. The system of claim 10, wherein the one or more processors are configured to:

adjust recording parameters of one or more of the source recording devices to modify one or more of the excluded recorded input samples encoded in the eliminated nodes, and

reactivate the eliminated nodes by encoding the modified recorded input samples therein for further training or prediction.

12. The system of claim 10, comprising filtering the training dataset:

i) by avoiding recording or storing the one or more recorded input samples at the one or more source recording devices; or

ii) after recording by the one or more source recording devices by deleting the one or more recorded input samples at a receiver prior to encoding the training dataset into the input layer.

13. A non-transitory computer-readable storage medium having instructions stored thereon, which when executed, cause one or more processors to:

receive a neural network comprising a plurality of layers, each layer comprising a plurality of nodes, each node connected by a plurality of weights to a respective plurality of nodes in one or more different layers of the plurality of layers;

receive a training dataset comprising initial instances of a plurality of recorded input samples from one or more source recording devices;

encode the initial instances of the plurality of recorded input samples, according to an input map, from the training dataset to a plurality of respective nodes in an input layer of the plurality of layers of the neural network;

sparsify the neural network by eliminating one or more nodes in the input layer of the neural network during a training phase; and

filter the training dataset to exclude subsequent instances of one or more of the recorded input samples from one or more of the source recording devices encoded by the input map to the eliminated nodes of the sparsified neural network; and

encode subsequent instances of the plurality of recorded input samples of the filtered training dataset to remaining nodes not eliminated in the input layer of the sparsified neural network to train the neural network in a subsequent training phase or to predict an output of the neural network in a prediction phase.

14. The non-transitory computer-readable storage medium of claim 13, having further instructions stored thereon, which when executed, cause the one or more processors to:

i) adjust recording parameters of one or more of the source recording devices to modify one or more of the excluded recorded input samples encoded in the eliminated nodes; and reactivate the eliminated nodes by encoding the modified recorded input samples therein for further training or prediction; or

ii) sparsify one or more hidden layers in the neural network; and filter the training data to exclude subsequent instances encoded in a root input layer node that is not eliminated, which has a plurality of hidden layer nodes branching therefrom that are eliminated or have cumulative unsatisfactory strength of connection, and optionally, wherein the cumulative strength of connection of the plurality of branching hidden layer nodes is a weighted sum of neuron weights or channel filters along paths originating at the root input layer node and connecting the hidden layer nodes branching therefrom.

15. The non-transitory computer-readable storage medium of claim 13, wherein sparsifying occurs in the input layer but not in hidden layers in the neural network; and the non-transitory computer-readable storage medium has further instructions stored thereon, which when executed, cause the one or more processors to filter the training dataset to exclude subsequent instances directly encoded, according to the input map, only in the eliminated nodes of the input layer,
to predict an output of the neural network in a prediction phase.

Fig. 1

EP 4 485 279 A1

**Fig. 2**

EP 4 485 279 A1

RECEIVE AN INITIAL TRAINING DATASET TO SPARSIFY AN INPUT LAYER OF A NEURAL NETWORK

300

↓

ENCODE INITIAL TRAINING DATASET ACCORDING TO AN INPUT MAP INTO INPUT LAYER NODES OF THE NEURAL NETWORK

302

↓

SPARSIFY THE NEURAL NETWORK BY ELIMINATING NODES IN THE INPUT LAYER

304

↓

FILTER A SUBSEQUENT TRAINING DATASET TO EXCLUDE TRAINING DATA ENCODED BY THE INPUT MAP TO THE ELIMINATED NODES OF THE SPARSIFIED NEURAL NETWORK

306

↓

ENCODE THE SPARSIFIED NEURAL NETWORK WITH THE FILTERED SUBSEQUENT TRAINING DATASET INPUT INTO THE REMAINING NODES NOT ELIMINATED IN THE INPUT LAYER

308

RE-TRAIN OR PREDICT

**Fig. 3**

Europäisches
Patentamt

European
Patent Office

Office européen
des brevets

# EUROPEAN SEARCH REPORT

**Application Number**

EP 24 18 4805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI FENG ET AL: "Input Layer Regularization of Multilayer Feedforward Neural Networks", IEEE ACCESS, vol. 5, 28 June 2017 (2017-06-28), pages 10979-10985, XP011655228, DOI: 10.1109/ACCESS.2017.2713389 [retrieved on 2017-06-29] * abstract; sections I, II, II.C, III.D; tables 2, 3 * | 1-15 | INV. G06N3/0495 G06N3/082 |
| A | US 2019/108436 A1 (DAVID ELI [IL] ET AL) 11 April 2019 (2019-04-11) * abstract; claims 1-30; figures 1-3, 6 * | 1-15 | |
| A | KHANDANI MASOUMEH KALANTARI ET AL: "A Study on Network Size Reduction Using Sparse Input Representation in Time Delay Neural Networks", 2020 IEEE 63RD INTERNATIONAL MIDWEST SYMPOSIUM ON CIRCUITS AND SYSTEMS (MWSCAS), IEEE, 9 August 2020 (2020-08-09), pages 864-867, XP033819038, DOI: 10.1109/MWSCAS48704.2020.9184438 [retrieved on 2020-09-01] * abstract; sections II, IV; figures 1-2 * | 1-15 | TECHNICAL FIELDS SEARCHED (IPC) G06N |

The present search report has been drawn up for all claims

| Place of search | Date of completion of the search | Examiner |
|---|---|---|
| The Hague | 20 November 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4805

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | Publication date | Patent family member(s) | Publication date |
|---|---|---|---|
| US 2019108436 A1 | 11-04-2019 | CN 111247537 A | 05-06-2020 |
| | | EP 3692474 A1 | 12-08-2020 |
| | | IL 273724 A | 31-05-2020 |
| | | IL 279805 A | 31-01-2021 |
| | | US 2019108436 A1 | 11-04-2019 |
| | | US 2019347536 A1 | 14-11-2019 |
| | | US 2023196061 A1 | 22-06-2023 |
| | | WO 2019069304 A1 | 11-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11580352 B